# EUROPEAN PATENT APPLICATION

(11) **EP 4 726 599 A1**
(43) Date of publication of application: **15.04.2026**
(21) Application number: 25203937.5
(22) Date of filing: 23.09.2025
(51) Int. Cl.: G06F 30/347, G06F 30/398

(54) **METHOD OF VERIFYING PLACEMENT OF COMPONENT ON CIRCUIT BOARD**

(30) Priority: 08.10.2024 KR 20240137176
(71) Applicant: SAMSUNG SDI CO., LTD., Yongin-si, Gyeonggi-do 17084 (KR)
(72) Inventor: KIM, Jinyoung, 17084 Yongin-si (KR); LEE, Unsic, 17084 Yongin-si (KR)
(74) Representative: Marks & Clerk LLP

(57) **Abstract**

A method of verifying placement of a component on a circuit board is performed by a verification system. The verification method includes receiving layout design data and verification rules of a circuit board, which is a verification target, from an external device, extracting circuit board information and component placement information from the layout design data, and determining whether or not a component placed on the circuit board conforms to the verification rules on the basis of the circuit board information and component placement information.

## Description

### BACKGROUND

### 1. Field

Aspects of embodiments of the present disclosure relate to a method of verifying placement of a component on a circuit board and a system supporting the same.

### 2. Description of Related Art

From among types of circuit board defects, there are defects that occur due to cracks in a component, such as fuses. When a defect due to a crack in a component placed on a circuit board is not found at an early stage, a product equipped with (or including) the corresponding circuit board will be found to be defective after being sold to a customer, which will increase costs. For example, a fuse crack may be caused by a variety of factors, including bending of a circuit board (e.g., a printed circuit board (PCB)), stress on a solder, thermal and mechanical impact problems, etc. These problems are often related to placement of components within the circuit board and, especially, due to orientations of the components. To reduce costs due to circuit board defects, the placement of components within the circuit board should be verified in advance at a design stage prior to manufacturing a product.

The above information disclosed in this Background section is for enhancement of understanding of the background of the present disclosure, and therefore, it may contain information that does not constitute a related (or prior) art.

### BRIEF SUMMARY

Embodiments of the present disclosure are directed to a method of verifying placement of a component on a circuit board including automatically verifying whether or not a circuit board complies with component placement criteria at a design stage of the corresponding circuit board and can output error information when there is placement violating the component placement criteria, thereby preventing cost increases in advance.

It should be noted that aspects and features of the present disclosure are not limited to the above-described aspects and features, and other aspects and features of the present disclosure will be apparent to those skilled in the art from the following descriptions.

According to an embodiment of the present disclosure, a method of verifying placement of a component on a circuit board includes receiving, by a verification system for placement of a component on a circuit board, layout design data and verification rules of the circuit board, which is a verification target, from an external device, extracting, by the verification system, circuit board information and component placement information from the layout design data, and determining, by the verification system, whether or not a component placed on the circuit board conforms to the verification rules on the basis of the circuit board information and the component placement information.

In one embodiment of the present disclosure, the verification rules may include an orientation of the component.

In one embodiment of the present disclosure, the verification rules may include a trace length between a first component and a second component.

In one embodiment of the present disclosure, the circuit board information may include a long side of a board (LSB), the component placement information may include an orientation of a fuse placed on the circuit board; and the determining of whether or not the component placed on the circuit board conforms to the verification rules may include determining, by the verification system, whether or not the orientation of the fuse is parallel to the LSB on the basis of the orientation of the fuse and the LSB.

In one embodiment of the present disclosure, the method of verifying placement of a component on a circuit board may further include outputting, by the verification system, a result of determining whether or not the component placed on the circuit board conforms to the verification rules.

In one embodiment of the present disclosure, the first component may be a component corresponding to an inlet into which an external noise is introduced, and the second component may be a fuse.

In one embodiment of the present disclosure, the first component may be a connector.

In one embodiment of the present disclosure, the verification rule may limit a trace length between the first component and the second component to 30 mm or less.

In one embodiment of the present disclosure, the determining of whether or not the component placed on the circuit board conforms to the verification rules may include, when one or more other components are between fuses placed closest to a component corresponding to an inlet into which an external noise is introduced, setting, by the verification system, the component corresponding to the inlet into which the external noise is introduced as the first component on the basis of the circuit board information and the component placement information, setting a component placed closest to the first component as the second component from among the one or more other components, and determining whether or not a trace length between the first component and the second component is within a threshold value.

According to another embodiment of the present disclosure, a verification system for placement of a component on a circuit board includes a memory for storing computer-readable commands and a processor configured to execute the commands.
The processor is configured to execute the stored commands to receive layout design data and verification rules of a circuit board, which is a verification target, from an external device, extract circuit board information and component placement information from the layout design data, and determine whether or not a component placed on the circuit board conforms to the verification rules on the basis of the circuit board information and the component placement information.

In one embodiment of the present disclosure, the verification rules may include an orientation of the component.

In one embodiment of the present disclosure, the verification rules may include a trace length between a first component and a second component.

In one embodiment of the present disclosure, the circuit board information may include an LSB, the component placement information may include an orientation of a fuse placed on the circuit, and in the process of determining whether or not a component placed on the circuit board conforms to the verification rules, the processor may be configured to determine whether or not the orientation of the fuse is parallel to the LSB on the basis of the orientation of the fuse and the LSB.

In one embodiment of the present disclosure, the processor may output a result of the determining of whether or not the component placed on the circuit board conforms to the verification rules.

In one embodiment of the present disclosure, the first component may be a component corresponding to an inlet into which an external noise is introduced, and the second component may be a fuse.

In one embodiment of the present disclosure, the first component may be a connector.

In one embodiment of the present disclosure, the verification rule may limit a trace length between the first component and the second component to 30 mm or less.

In one embodiment of the present disclosure, in the process of outputting the result of the determining of whether or not the component placed on the circuit board conforms to the verification rules, when one or more other components are present between fuses placed closest to a component corresponding to an inlet into which an external noise is introduced, the processor may be configured to set the component corresponding to the inlet into which the external noise is introduced as the first component on the basis of the circuit board information and the component placement information, set a component placed closest to the first component as the second component from among the one or more other components, and determine whether or not a trace length between the first component and the second component is within a threshold value.

At least some of the above and other features of the invention are set out in the claims.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a flowchart describing a method of verifying placement of a component on a circuit board according to an embodiment of the present disclosure;
FIGS. 2 and 3 are diagrams describing a process of verifying an orientation of a verification target component based on a long side of a board (LSB);
FIGS. 4 and 5 are diagrams for describing a process of verifying suitability of trace lengths between two components placed on a circuit board; and
FIG. 6 is a block diagram describing a configuration of a verification system for placement of a component on a circuit board according to embodiments of the present disclosure.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. In addition, the same reference numerals may be assigned to the same components in different embodiments.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

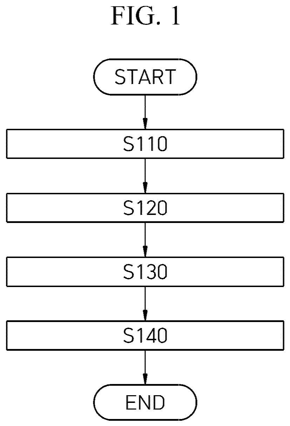

FIG. 1 is a flowchart describing a method of verifying placement of a component on a circuit board according to embodiments of the present disclosure.

Circuit development may include four stages: 1) component design, 2) circuit diagram design, 3) layout design, and 4) circuit board production.

In the present specification, an embodiment of verifying, in 3) layout design, whether an orientation of a fuse placed on a circuit board and a trace length between the fuse and other components conform to a standard will be described. The circuit board may be a printed circuit board (PCB).

In some embodiments, at the outcome of the verification process, the method outputs verified design data. The verified design data includes design data that has been verified for production by the verification process (e.g. placement and orientation of a fuse within a circuit board and/or including a trace length between a fuse and another component or components of the circuit board). The design data may be in a format to function as machine-readable instructions to operate a manufacturing apparatus to fabricate the circuit board. For example, the design data may be part of a design data file configured to be read and executed by the manufacturing apparatus.

In some embodiments, the verification process is configured to receive input design data that is in a format to function as machine-readable instructions to operate a manufacturing apparatus to fabricate the circuit board. The verification process is thus able to extract design layout information form the instructions and perform a verification process to either output verified design data or output an indication that the design data is not verified. If the design data is not verified it can be discarded, or modified before being re-verified by the verification process. Thus, not only can the quality of the finished product can be verified before actual manufacture (to prevent manufacture of unnecessary faulty components), but the design process is implemented more efficiently. Instead of performing post-fault analysis and review of faulty components, and updating a design file accordingly, the design data can be verified while in the design data stage to confirm physical properties of the component to be manufactured, thereby allowing faults in the design to be quickly located and the design data updated.

In some embodiments of the present specification, there is also described a method of manufacture of a circuit board. The method of manufacture includes the process of component verification as described herein in addition to the steps of a manufacturing process to manufacture a circuit board according to the verified circuit design. The steps of the manufacturing process may include directing a manufacturing apparatus to manufacture a circuit board based on the design layout that has been verified by the verification process. The verification process may form part of an automated manufacturing method in which the design data is verified prior to initiation of the manufacturing apparatus to manufacture one or a plurality of a circuit board design. If the design data is not verified by the verification process, the manufacturing apparatus does not manufacture a circuit board (e.g. the manufacturing apparatus is instructed to not proceed with manufacturing steps according to the non-verified design data).

Referring to FIG. 1, the method of verifying placement of a component on a circuit board according to an embodiment of the present disclosure includes operations (or steps) S110 to S140. The method of verifying placement of a component on a circuit board shown in FIG. 1 are one embodiment, and operations of the method of verifying placement of a component on a circuit board according to the present disclosure are not limited to the embodiment shown in FIG. 1 and may be added, changed, or omitted, as necessary.

For convenience of description, it is assumed that the method of verifying placement of a component on a circuit board according to one embodiment of the present disclosure is performed by a verification system for placement of a component on a circuit board 1000 (hereinafter abbreviated as "verification system").

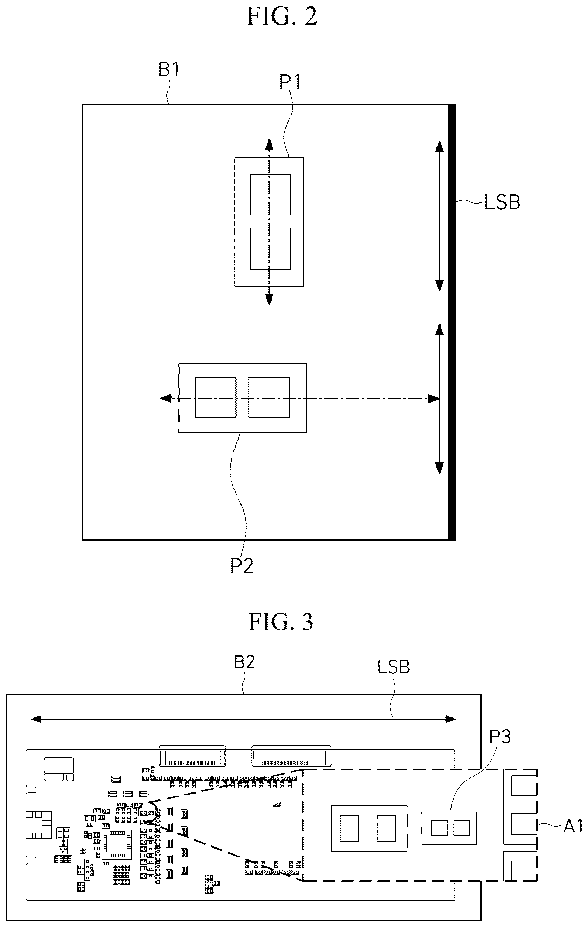

Hereinafter, operations S110 to S140 will be described. Based on FIG. 1, each step will be described with reference to FIGS. 2 to 5.

Operation S110 is an operation (or step) of receiving layout design data of the circuit board and a verification rule.

The verification system 1000 may receive the layout design data of the circuit board, which is a verification target, and verification rules for components placed on the circuit board from an external device or a user through a communication device 1020 or an input interface device 1050 and may store the layout design data and the verification rules for the components in a memory 1030 or a storage device 1040.

The verification rules may include positions of the components, orientations of the components, a trace length between the components, whether or not the components interfere with other components due to sizes and shapes of the component, a minimum distance between a component whose heat generation exceeds a reference value and a heat-sensitive component, whether or not the component is automotive qualification certified, electromagnetic interference (EMI), and whether or not an interference signal occurs due to resonance between the component and the circuit board at a specific frequency.

Operation S120 is an operation (or step) of extracting circuit board information and component placement information.

The verification system 1000 may extract the circuit board information and the component placement information from the layout design data received in operation S110. For example, the verification system 1000 may extract size information of the circuit board from the layout design data and may recognize (or may determine) a long side of a board (LSB) on the basis of the size information of the circuit board. In addition, the verification system 1000 may extract the component placement information from the layout design data, and the component placement information may include an orientation of a component (e.g., an orientation of a fuse), connection information between components, and trace lengths between components (e.g., a trace length between a connector and a fuse and a trace length between the connector and a transformer). In addition, the verification system 1000 may extract codes of components placed on the circuit board from the layout design data and estimate EMI between adjacent components placed on the circuit board by using an electromagnetic simulation tool.

Operation S130 is an operation (or step) of verifying the component placement information.

The verification system 1000 may verify the component placement information according to the component verification rules received in operation S110. The verification system 1000 may verify the component placement information on the basis of the circuit board information extracted in operation S120.

As described above, the component verification rules may include rules regarding orientations of components. For example, a rule that a fuse placed on the circuit board, which is a verification target, should be placed perpendicular to an LSB of the circuit board may be applied. FIGS. 2 and 3 are diagrams describing a process of verifying an orientation of a verification target component based on the LSB.

In FIG. 2, because a first fuse P1 placed on a PCB B1 has an orientation parallel to the LSB, the first fuse P1 does not conform to the component verification rule. On the other hand, because a second fuse P2 placed on the PCB B1 has an orientation perpendicular to the LSB, it conforms to the component verification rule.

In FIG. 3, because a third fuse P3 placed on the PCB B2 has an orientation parallel to the LSB when enlarged (see region A1), the third fuse P3 does not conform to the component verification rule. On the basis of the circuit board information (LSB) and the component layout information (e.g., the orientations of the fuses), the verification system 1000 may recognize that the orientations of the first fuse P1 shown in FIG. 2 and the third fuse P3 shown in FIG. 3 are parallel to the LSB and determine that an error occurs that does not conform to a verification rule (e.g., that the direction of the fuse should be perpendicular to the LSB).

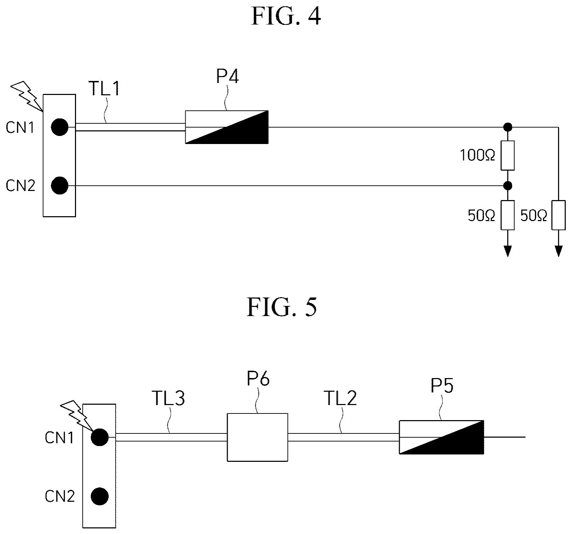

In addition, as described above, the component verification rules may include a rule regarding a trace length between components. FIGS. 4 and 5 are diagrams describing a process of verifying suitability of trace lengths between two components placed on a circuit board. To reduce or minimize an influence of an external overcurrent or overvoltage on other components or lines within the circuit board or to block an external noise at an inlet (e.g., a connector), a fuse should be placed (or arranged) as close as possible to a connector. For example, an allowable range of a trace length TL1 between a connector CN1 and a fuse P4 may be determined based on a trace length when the fuse P4 is placed closest to the connector CN1 into which an external noise is introduced compared to other components. For example, to prevent the external noise from being introduced into other components, lines, or signals, an allowable range of the trace length TL1 between the connector CN1 into which the external noise is introduced and the fuse P4 may be determined to be within about 30 mm.

As shown in FIG. 4, the verification system 1000 may verify whether or not the trace length TL1 between the connector CN1 and the fuse P4, which are placed on the PCB, is within an allowable range (e.g., within a threshold value or less). For example, the verification system 1000 may determine whether or not the component placement information (e.g., the trace length TL1 between the connector CN1 and the fuse P4) conforms to the component verification rule (e.g., a rule that a trace length should be within an allowable range or a threshold value or less), and otherwise, the verification system 1000 may infer (or determine) that an error occurs in the placement of the fuse.

In addition, the verification system 1000 may determine whether or not other components are present between the fuse and the connector on the basis of the component placement information. The verification system 1000 may extract a path from the fuse to the connector on the basis of connection information between components of the component layout information and may recognize (or may determine) which component is closest to the connector. As shown in FIG. 5, when another component P6 (e.g., a transformer) is present between a fuse P5 and the connector CN1, the verification system 1000 may determine whether or not a trace length TL3 between the corresponding component P6 (e.g., a transformer) and the connector CN1 conforms to the component verification rule. In this example, the transformer P6, which is a verification target, is the component closest to the connector CN1 from among the components present between the fuse P5 and the connector CN1. When the trace length TL3 between the corresponding component P6 (e.g., a transformer) and the connector CN1 does not conform to the component verification rule (e.g., a trace length should be within an allowable range or a threshold value or less), the verification system 1000 may infer (or may determine) that an error occurs.

The component verification rule may include a rule that a component should be an automotive qualification certified component. When a code list of components receiving automotive qualification certification is stored in the storage device 1040, the verification system 1000 may determine whether or not a component code extracted from the layout design data is present in the code list, may determine whether or not the component is an uncertified component, and when the component is an uncertified component, the verification system 1000 may infer (or may determine) that an error occurs.

In addition, the component verification rule may include a rule that EMI should be within an allowable value, and when EMI between adjacent components placed on the circuit board exceeds the allowable value, the verification system 1000 may infer (or may determine) that an error occurs.

Operation S140 is an operation (or step) of outputting a verification result of the component placement information. For example, this step is an operation in which the verification system 1000 outputs a result of determining whether or not the component placed on the circuit board conforms to the component verification rule.

As the result of performing operation S130, when the error occurs in the component placement information, the verification system 1000 may display or output the component placement information of the corresponding component and a violated component verification rule through the output interface device 1060. When no error occurs in the component placement information, the verification system 1000 may display or output that verification of the component placement information for the verification target is completed through the output interface device 1060.

The above method of verifying placement of a component on a circuit board has been described with reference to the flowchart shown in FIG. 1. Although the method has been illustrated and described as a series of blocks for simplicity of description, the present disclosure is not limited to the order of the blocks as illustrated, some blocks may occur in a different order or concurrently with other blocks than illustrated and described in the present specification, and various other branches, flow paths, and orders of blocks may be implemented that achieve the same or similar result. In addition, not all illustrated blocks are necessarily required for implementing the method described herein.

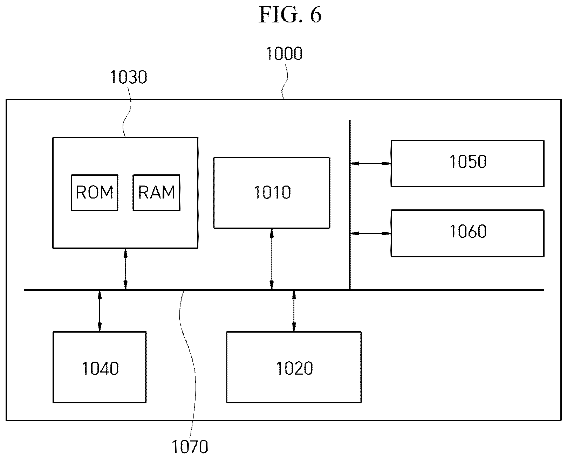

In the description referring to FIGS. 1 to 5, the operations may be further divided into additional operations or combined into fewer operations depending on the implementation example of the present disclosure. In addition, some operations may be omitted, and the order between operations may be changed. In addition, the content of FIGS. 1 to 5 may be applied to the content of FIG. 6.

FIG. 6 is a diagram illustrating a configuration of a verification system according to one embodiment of the present disclosure. The verification system 1000 may be implemented in the form of a computer system as shown in FIG. 6.

Referring to FIG. 6, the verification system 1000 may include at least one of at least one processor 1010, a memory 1030, an input interface device 1050, an output interface device 1060, and a storage device 1040, which communicate through a bus 1070. The verification system 1000 may further include a communication device 1020 coupled to a network. The processor 1010 may be a central processing unit (CPU) or a semiconductor device for executing computer-readable commands stored in the memory 1030 or the storage device 1040. The memory 1030 and storage device 1040 may include various types of volatile or nonvolatile storage media. For example, the memory 1030 may include a read only memory (ROM) and a random-access memory (RAM). In one example of the present disclosure, the memory 1030 may be located inside or outside the processor 1010, and the memory 1030 may be connected to the processor 1010 through various known manners and buses. The memory 1030 may be various types of volatile or nonvolatile storage media, and for example, the memory 1030 may include a ROM or a RAM.

Embodiments of the present disclosure may be implemented as a method implemented in a computer or as a non-transitory computer-readable medium in which computer-executable commands are stored. In one embodiment, when computer-readable commands are executed by the processor 1010, the computer-readable commands may perform a method according to at least one embodiment of the present disclosure.

The communication device 1020 may transmit or receive a signal via wired connection or a wireless connection.

In addition, the method of verifying placement of a component on a circuit board according to embodiments of the present disclosure may be implemented in the form of a program command, which is executable through various computers, and may be recorded in a computer-readable medium.

The computer-readable medium may include program commands, data files, data structures, and the like alone or in combination. The program commands recorded in the computer-readable medium may be specially designed and configured for embodiments of the present disclosure or may be available to those skilled in computer software. Computer-readable recording media may include hardware devices configured to store and execute program commands. For example, the computer-readable recording media may include magnetic media, such as a hard disk, a floppy disk, and a magnetic tape, optical recording media, such as a compact disc read only memory (CD-ROM) and a digital versatile disc (DVD), a magneto-optical medium, such as a floptical disk, a ROM, a RAM, a flash memory, and the like. The program commands may include machine language codes generated by a compiler, as well as high-level language codes which are executable by a computer by using an interpreter or the like.

By executing computer-readable commands stored in the memory 1030 or the storage device 1040, the processor 1010 may receive layout design data and verification rules of a circuit board, which is a verification target, from an external device, extract circuit board information and component placement information from the layout design data, and determine whether or not a component placed on the circuit board conforms to the verification rules on the basis of the circuit board information and the component placement information.

The verification rules may include positions of the components, orientations of the components, a trace length between the components, whether or not the components interfere with other components due to sizes and shapes of the components, a minimum distance between a component whose heat generation exceeds a reference value and a heat-sensitive component, whether or not the component is automotive qualification certified, EMI, and whether or not an interference signal occurs due to resonance between the component and the circuit board at a specific frequency.

In one embodiment of the present disclosure, the verification rules include a rule regarding an orientation of the component. The circuit board information may include an LSB, and the component placement information may include an orientation of a fuse placed on the circuit board. In such an embodiment, in the process of determining whether or not a component placed on the circuit board conforms to the verification rules, the at least one processor may determine whether or not the orientation of the fuse is parallel to the LSB on the basis of the orientation of the fuse and the LSB.

The at least one processor may output a result of determining whether or not the component placed on the circuit board conforms to the verification rules.

According to embodiments of the present disclosure, by verifying whether or not components placed on a circuit board conform to criteria at a design stage in advance, design errors can be found and corrected in advance, thereby ensuring design quality and reducing the cost and time required for redesign and re-manufacturing.

Aspects and features of the present disclosure are not limited to the above-mentioned aspects and features and other aspects and features that are not mentioned can be clearly understood by those skilled in the art to which the present disclosure pertains from the above description.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

Further Embodiments are set out in the following clauses:
Clause 1. A method of verifying placement of a component on a circuit board, the method comprising:
   receiving, by a verification system for placement of a component on a circuit board, layout design data and verification rules of the circuit board, the circuit board being a verification target, from an external device;
   extracting, by the verification system, circuit board information and component placement information from the layout design data; and
   determining, by the verification system, whether or not a component placed on the circuit board conforms to the verification rules on the basis of the circuit board information and the component placement information.
Clause 2. The method of clause 1, wherein the verification rules comprise an orientation of the component.
Clause 3. The method of clause 1 or clause 2, wherein the verification rules comprise a trace length between a first component and a second component.
Clause 4. The method of clause 2 or clause 3, wherein:
   the circuit board information comprises a long side of a board (LSB);
   the component placement information comprises an orientation of a fuse placed on the circuit board; and
   the determining of whether or not the component placed on the circuit board conforms to the verification rules comprises determining, by the verification system, whether or not the orientation of the fuse is parallel to the LSB on the basis of the orientation of the fuse and the LSB.
Clause 5. The method of any preceding clause, further comprising outputting, by the verification system, a result of determining whether or not the component placed on the circuit board conforms to the verification rules.
Clause 6. The method according to any one of clauses 3 - 5, wherein:
   the first component is a component corresponding to an inlet into which an external noise is introduced; and
   the second component is a fuse.
Clause 7. The method of clause 6, wherein the first component is a connector.
Clause 8. The method of clause 7, wherein the verification rule limits a trace length between the first component and the second component to 30 mm or less.
Clause 9. The method according to any one of clauses 3 - 8, wherein the determining of whether or not the component placed on the circuit board conforms to the verification rules comprises, when one or more other component are between fuses placed closest to a component corresponding to an inlet into which an external noise is introduced:
   setting, by the verification system, the component corresponding to the inlet into which the external noise is introduced as the first component on the basis of the circuit board information and the component placement information;
   setting, by the verification system, the component placed closest to the first component as the second component from among the one or more other components; and
   determining, by the verification system, whether or not a trace length between the first component and the second component is within a threshold value.
Clause 10. A verification system for placement of a component on a circuit board, the system comprising:
   a memory configured to store computer-readable commands; and
   a processor configured to execute the commands,
   wherein the processor is configured to execute the commands to:
      receive layout design data and verification rules of a circuit board, the circuit board being a verification target, from an external device;
      extract circuit board information and component placement information from the layout design data; and
      determine whether or not a component placed on the circuit board conforms to the verification rules on the basis of the circuit board information and the component placement information.
Clause 11. The system of clause 10, wherein the verification rules comprise an orientation of the component.
Clause 12. The system of clause 10 or clause 11, wherein the verification rules comprise a trace length between a first component and a second component.
Clause 13. The system of clause 11 or clause 12, wherein:
   the circuit board information comprises a long side of a board (LSB);
   the component placement information comprises an orientation of a fuse placed on the circuit board; and
   in the process of determining whether or not a component placed on the circuit board conforms to the verification rules, the processor is configured to determine whether or not the orientation of the fuse is parallel to the LSB on the basis of the orientation of the fuse and the LSB.
Clause 14. The system according to any one of clauses 9 - 13, wherein the processor is configured to output a result of the determining of whether or not the component placed on the circuit board conforms to the verification rules.
Clause 15. The system according to any one of clauses 11 - 14, wherein:
   the first component is a component corresponding to an inlet into which an external noise is introduced; and
   the second component is a fuse.

## Claims

1. A method of verifying placement of a component on a circuit board, the method comprising:
receiving, by a verification system for placement of a component on a circuit board, layout design data and verification rules of the circuit board, the circuit board being a verification target, from an external device;
extracting, by the verification system, circuit board information and component placement information from the layout design data; and
determining, by the verification system, whether or not a component placed on the circuit board conforms to the verification rules on the basis of the circuit board information and the component placement information.

2. The method as claimed in claim 1, wherein the verification rules comprise an orientation of the component.

3. The method as claimed in claim 1 or claim 2, wherein the verification rules comprise a trace length between a first component and a second component.

4. The method as claimed in claim 2 or claim 3, wherein:
the circuit board information comprises a long side of a board (LSB);
the component placement information comprises an orientation of a fuse placed on the circuit board; and
the determining of whether or not the component placed on the circuit board conforms to the verification rules comprises determining, by the verification system, whether or not the orientation of the fuse is parallel to the LSB on the basis of the orientation of the fuse and the LSB.

5. The method as claimed in any preceding claim, further comprising outputting, by the verification system, a result of determining whether or not the component placed on the circuit board conforms to the verification rules.

6. The method as claimed in any one of claims 3 - 5, wherein:
the first component is a component corresponding to an inlet into which an external noise is introduced; and
the second component is a fuse.

7. The method as claimed in claim 6, wherein the first component is a connector, wherein, optionally the verification rule limits a trace length between the first component and the second component to 30 mm or less.

8. The method as claimed in any one of claims 3 - 7, wherein the determining of whether or not the component placed on the circuit board conforms to the verification rules comprises, when one or more other component is between fuses placed closest to a component corresponding to an inlet into which an external noise is introduced:
setting, by the verification system, the component corresponding to the inlet into which the external noise is introduced as the first component on the basis of the circuit board information and the component placement information;
setting, by the verification system, the component placed closest to the first component as the second component from among the one or more other components; and
determining, by the verification system, whether or not a trace length between the first component and the second component is within a threshold value.

9. A verification system for placement of a component on a circuit board, the system comprising:
a processor is configured to perform a method of verifying placement of a component on a circuit board, the method comprising:
receiving layout design data and verification rules of a circuit board, the circuit board being a verification target, from an external device;
extracting circuit board information and component placement information from the layout design data; and
determining whether or not a component placed on the circuit board conforms to the verification rules on the basis of the circuit board information and the component placement information.

10. The system as claimed in claim 9, wherein the verification rules comprise an orientation of the component.

11. The system as claimed in claim 9 or claim 10, wherein the verification rules comprise a trace length between a first component and a second component.

12. The system as claimed in claim 10 or claim 11, wherein:
the circuit board information comprises a long side of a board (LSB);
the component placement information comprises an orientation of a fuse placed on the circuit board; and
in the process of determining whether or not a component placed on the circuit board conforms to the verification rules, the processor is configured to determine whether or not the orientation of the fuse is parallel to the LSB on the basis of the orientation of the fuse and the LSB.

13. The system as claimed in any one of claims 9 - 12, wherein the processor is configured to output a result of the determining of whether or not the component placed on the circuit board conforms to the verification rules.

14. The system as claimed in any one of claims 11 - 13, wherein:
the first component is a component corresponding to an inlet into which an external noise is introduced; and
the second component is a fuse.

15. The system as claimed in any one of claims 9 - 14, further comprising a memory configured to store a computer program comprising instructions, wherein the processor is configured to execute the instructions to perform the method of verifying placement of a component on a circuit board.
